# EUROPÄISCHE PATENTSCHRIFT

(11) **EP 3 237 285 B1**
(45) Veröffentlichungstag und Bekanntmachung des Hinweises auf die Patenterteilung: **01.12.2021**
(21) Anmeldenummer: 15816193.5
(22) Anmeldetag: 22.12.2015
(51) Int. Cl.: B64D 11/06

(54) **SITZVORRICHTUNG MIT ABSTÜTZELEMENT**
SEAT DEVICE WITH SUPPORTING ELEMENT
DISPOSITIF DE SIÈGE AVEC ÉLÉMENT DE SUPPORT

(30) Priorität: 23.12.2014 DE 102014119596
(43) Veröffentlichungstag der Anmeldung: 01.11.2017
(73) Patentinhaber: Recaro Aircraft Seating GmbH & Co. KG, 74523 Schwäbisch Hall (DE)
(72) Erfinder: BICH, Christoph, 73453 Abtsgmünd (DE); JAKUBOWSKI, Jens, 73527 Schwäbisch Gmünd (DE); ERB, Andreas, 74523 Schwäbisch Hall (DE); FORGATSCH, Oliver, 74523 Schwäbisch Hall (DE)
(74) Vertreter: Daub, Thomas
(86) Internationale Anmeldenummer: PCT/EP2015/081073
(87) Internationale Veröffentlichungsnummer: WO 2016/102616

(56) Entgegenhaltungen:
- EP-A2- 0 084 845
- EP-A2- 0 193 165
- WO-A2-2013/144845
- DE-A1- 10 224 048
- GB-A- 2 437 164
- US-A1- 2002 036 418
- US-A1- 2004 100 138
- US-A1- 2014 300 147

## Beschreibung

### Stand der Technik

Die Erfindung betrifft eine Sitzvorrichtung nach dem Oberbegriff des Patentanspruchs 1. So eine Sitzvorrichtung ist aus der WO2013144845A bekannt.

Es ist bereits eine Sitzvorrichtung, insbesondere eine Fluggastsitzvorrichtung, mit zumindest einer Sitzbodeneinheit, die einen Sitzbereich ausbildet, und mit zumindest einer Armlehneneinheit, die dazu vorgesehen ist, zumindest den Sitzbereich seitlich zu begrenzen, vorgeschlagen worden.

Die Aufgabe der Erfindung besteht insbesondere darin, eine gattungsgemäße Vorrichtung mit verbesserten Eigenschaften hinsichtlich eines Komforts für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Sitzvorrichtung, insbesondere einer Fluggastsitzvorrichtung, mit zumindest einer Sitzbodeneinheit, die einen Sitzbereich ausbildet, und mit zumindest einer Armlehneneinheit, die dazu vorgesehen ist, zumindest den Sitzbereich seitlich zu begrenzen.

Es wird vorgeschlagen, dass die Sitzvorrichtung wenigstens ein Abstützelement aufweist, das zumindest einen Bereich zwischen der Sitzbodeneinheit, der Armlehneneinheit und/oder der Rückenlehneneinheit überspannt. Unter einer "Sitzvorrichtung" soll dabei insbesondere eine Vorrichtung verstanden werden, die wenigstens einen Teil oder einen gesamten Sitz, wie insbesondere einen Fluggastsitz, ausbildet. Unter einem "Fluggastsitz" soll dabei insbesondere ein Sitz verstanden werden, der in einer Flugzeugkabine eines Flugzeugs aufgeständert ist. Dabei ist der Fluggastsitz vorzugsweise als Teil einer von mehreren nebeneinander angeordneten Fluggastsitzen ausgebildet. Der Fluggastsitz umfasst dabei insbesondere wenigstens eine Sitzbodeneinheit, die einen Sitzbereich für einen Passagier ausbildet, eine Rückenlehneneinheit, die eine Rückenlehnenauflagefläche bereitstellt, an der sich ein auf dem Fluggastsitz sitzender Passagier mit seinem Rücken abstützen kann, und wenigstens eine Armlehneneinheit, auf der der Passagier einen Arm zumindest teilweise ablegen kann. Unter einer "Armlehneneinheit" soll dabei insbesondere eine Einheit verstanden werden, die einen Teil oder vorzugsweise eine komplette Armlehne für einen Sitz, insbesondere einen Fluggastsitz, ausbildet. Die Armlehneneinheit bildet dabei wenigstens eine Auflagefläche aus, auf der ein auf dem Fluggastsitz sitzender Passagier seinen Arm zumindest teilweise ablegen kann. Zur Ausbildung der wenigstens einen Auflagefläche weist die Armlehneneinheit dabei wenigstens ein Auflageelement auf. Unter einer "Sitzbodeneinheit" soll dabei insbesondere eine Einheit verstanden werden, die den Sitzbereich für einen Passagier ausbildet, wobei die Sitzbodeneinheit dabei vorzugsweise von einem Grundkörper und einer auf dem Grundkörper angebrachten Polstereinheit gebildet ist. Unter einem "Sitzbereich" soll dabei insbesondere ein Bereich des Fluggastsitzes verstanden werden, der dazu vorgesehen ist, dass ein Passagier insbesondere während eines Flugs darauf sitzt. Der Sitzbereich ist dabei von der Sitzbodeneinheit ausgebildet, die vorzugsweise wenigstens einen Grundkörper und ein auf dem Grundkörper angebrachtes Polsterelement umfasst, welches den Sitzbereich ausbildet. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Rückenlehneneinheit" soll dabei insbesondere eine Einheit des Fluggastsitzes verstanden werden, die eine Rückenlehnenauflagefläche ausbildet, an der ein auf dem Fluggastsitz sitzender Passagier seinen Rücken anlehnen kann. Dabei umfasst die Rückenlehneneinheit vorzugsweise zumindest einen Grundkörper und eine Polstereinheit, welche die Rückenlehnenauflagefläche ausbildet. Die Rückenlehneneinheit ist dabei an einem hinteren Ende der Sitzbodeneinheit angeordnet und erstreckt sich von der Sitzbodeneinheit nach oben, von einer Aufständereinheit weg. Unter einem "Abstützelement" soll dabei insbesondere ein Element verstanden werden, an dem sich ein Passagier mit einem Teil seines Körpers, insbesondere mit einem unteren, seitlichen Rückenbereich abstützen kann. Dabei ist das Abstützelement von einem Element gebildet, das eine Fläche aufweist, über die eine Kraft in eine tragende Struktur der Sitzvorrichtung eingeleitet werden kann. Dabei kann das Abstützelement von verschiedenen Elementen gebildet sein. Dabei ist es denkbar, dass das Abstützelement von einem Polster, einem Luftkissen, einem elastischen Kunststoff oder einem Bespannungselement, wie insbesondere einem Textil, gebildet ist. Grundsätzlich ist es auch denkbar, dass mehrere nebeneinander ausgeordnete Abstützelemente vorhanden sind, beispielsweise mehrere nebeneinander verlaufende Gummibänder. Durch eine erfindungsgemäße Ausgestaltung kann vorteilhaft eine Sitzvorrichtung bereitgestellt werden, die besonders komfortabel ausgebildet ist. Durch das Abstützelement kann vorteilhaft eine seitliche Abstützung bereitgestellt werden, an der sich ein Passagier mit seinem Rücken seitlich abstützen kann und eine besonders komfortable Position auf dem Fluggastsitz einnehmen kann.

Weiter wird vorgeschlagen, dass das Abstützelement als ein Bespannungselement ausgebildet ist. Unter einem "Bespannungselement" soll dabei insbesondere ein elastisches Element verstanden werden, das durch Befestigung an mehreren seiner Enden in einem Bereich aufgespannt ist. Dabei ist das Bespannungselement vorzugsweise von einem Textil, wie insbesondere einem Netz, gebildet. Grundsätzlich ist es auch denkbar, dass das Bespannungselement von einem dünnwandigen Kunststoff, einem Faserverbundwerkstoff oder anderen, dem Fachmann als sinnvoll erscheinenden Materialien gebildet ist. Dadurch kann das Abstützelement besonders vorteilhaft und komfortabel für einen Passagier ausgebildet werden.

Zudem wird vorgeschlagen, dass die Armlehneneinheit wenigstens ein Auflageelement umfasst, an dem das Abstützelement angebunden ist. Unter einem "Auflageelement" soll dabei insbesondere ein Element verstanden werden, das vorzugsweise aus einem elastischen formstabilen Material gebildet ist und wenigstens eine Fläche aufweist, die die Auflagefläche direkt oder indirekt ausbildet. Es ist denkbar, dass das Auflageelement die Auflagefläche direkt ausbildet und ein Passagier direkt in Kontakt mit dem Auflageelement kommt oder dass die Armlehneneinheit wenigstens ein Polsterelement umfasst, das das Auflageelement bedeckt und so die Auflagefläche ausbildet, wodurch das Auflageelement die Auflagefläche indirekt ausbildet. Dadurch kann das Abstützelement besonders einfach in die Sitzvorrichtung integriert werden.

Weiterhin wird vorgeschlagen, dass die Armlehneneinheit wenigstens ein Versteifungselement aufweist, das dazu vorgesehen ist, das Abstützelement auszusteifen. Unter einem "Versteifungselement" soll dabei insbesondere ein Element verstanden werden, welches dazu vorgesehen ist, eine Steifigkeit des Abstützelements zumindest in einem Teilbereich zu erhöhen. Dabei ist es denkbar, dass das Versteifungselement als ein mit dem Abstützelement verbundenes festes Element, wie beispielsweise eine Stange oder ein blechartiges Element, ausgebildet ist. Grundsätzlich ist es auch denkbar, dass das Versteifungselement in das Abstützelement integriert ist und beispielsweise entweder von einem eingenähten Element gebildet ist oder lediglich durch eine entsprechende Vernähung gebildet ist. Das Versteifungselement verbindet dabei vorzugsweise das Auflageelement der Armlehneneinheit mit der Sitzbodeneinheit. Dabei ist das Versteifungselement sowohl mit dem Auflageelement der Armlehneneinheit als auch mit der Sitzbodeneinheit gekoppelt, wobei es denkbar ist, dass ein Kraftfluss über das Versteifungselement vorgesehen ist, der Kräfte, die durch einen Gebrauch der Armlehneneinheit entstehen, durch das Versteifungselement in den Sitzboden einleitet. Grundsätzlich ist es aber auch denkbar, dass das Versteifungselement lediglich eine Aussteifungsfunktion für das Abstützelement ausübt und nicht zur Kraftübertragung von der Armlehneneinheit in die Sitzbodeneinheit dient. Dadurch kann das Abstützelement vorteilhaft ausgesteift und so vorteilhaft ausgerichtet werden.

Außerdem wird vorgeschlagen, dass das Abstützelement mit seinem vorderen Ende an dem Versteifungselement angebunden ist. Unter einem "vorderen Ende des Abstützelements" soll dabei insbesondere ein der Rückenlehneneinheit abgewandtes Ende des Abstützelements verstanden werden. Dadurch kann das Abstützelement besonders vorteilhaft versteift werden.

Ferner wird vorgeschlagen, dass die Rückenlehneneinheit eine Rückenlehnenauflagefläche ausbildet, die in einem unteren Bereich eine Verjüngung aufweist. Unter einer "Rückenlehnenauflagefläche" soll dabei insbesondere eine Fläche verstanden werden, die dem Passagier zur Verfügung steht, um sich mit seinem Rücken anzulehnen. Unter einem "unteren Bereich" soll dabei insbesondere ein Bereich der Rückenlehneneinheit verstanden werden, der der Sitzbodeneinheit zugewandt ist. Der untere Bereich nimmt dabei in etwa das untere Drittel der Rückenlehnenauflagefläche ein. Unter einer "Verjüngung" soll dabei insbesondere ein Bereich verstanden werden, der über eine definierte Länge unterschiedliche Breiten aufweist und dabei, von einem Startpunkt der Verjüngung aus gesehen, immer schmäler wird. Dadurch kann eine besonders vorteilhafte und komfortable Rückenlehnenauflagefläche erreicht werden.

Weiter wird vorgeschlagen, dass das Abstützelement direkt an die Verjüngung der Rückenlehnenauflagefläche anschließt. Unter "direkt anschließen" soll dabei insbesondere verstanden werden, dass ein Übergang zwischen der Rückenlehnenauflagefläche und dem Abstützelement direkt an der Verjüngung gelegen ist. Dadurch kann vorteilhaft eine kontinuierliche Abstützfläche bereitgestellt werden.

Es wird weiter vorgeschlagen, dass der untere Bereich der Rückenlehnenauflagefläche eine Breite aufweist, die um wenigstens 30 % kleiner ist als eine Breite der Rückenlehnenauflagefläche in einem oberen Bereich. Dabei ist die Breite der Rückenlehnenauflagefläche in dem unteren Bereich vorzugsweise um mindestens 30 %, vorteilhaft um zumindest 50 % und in einer besonders vorteilhaften Ausgestaltung um zumindest 60% kleiner als in dem oberen Bereich. Unter einer "Breite der Rückenlehnenauflagefläche" soll dabei insbesondere eine Erstreckung der Rückenlehnenauflagefläche von einem seitlichen Ende bis an ein gegenüberliegendes seitliches Ende verstanden werden. Die Breite der Rückenlehnenauflagefläche entspricht dabei der Breite, die ein Passagier zum Anlehnen seines Rückens zur Verfügung hat. Unter einem "oberen Bereich der Rückenlehnenauflagefläche" soll dabei insbesondere eine der Sitzbodeneinheit abgewandte Seite der Rückenlehnenauflagefläche verstanden werden, die insbesondere auch einen Kopflehnenbereich ausbildet. Dadurch kann eine besonders vorteilhafte Rückenlehnenauflagefläche erreicht werden.

Zudem wird vorgeschlagen, dass der Sitzbereich der Sitzbodeneinheit in einem hinteren Bereich eine Verjüngung aufweist. Unter einem "hinteren Bereich des Sitzbereichs" soll dabei insbesondere ein der Rückenlehneneinheit zugewandter Bereich der Sitzbodeneinheit verstanden werden. Dabei bildet der hintere Bereich des Sitzbereichs etwa ein Drittel der Sitzbodeneinheit aus. Dadurch kann der Sitzbereich besonders vorteilhaft ausgebildet werden, um eine komfortable Sitzposition für einen Passagier zu erreichen.

Weiterhin wird vorgeschlagen, dass das Abstützelement direkt an die Verjüngung des Sitzbereichs anschließt. Dadurch kann ein besonders vorteilhafter Übergang zwischen der Sitzbodeneinheit und dem Abstützelement erreicht werden, wodurch eine besonders komfortable Sitzvorrichtung erreicht werden kann.

Außerdem wird vorgeschlagen, dass der hintere Bereich des Sitzbereichs eine Breite aufweist, die um wenigstens 50 % kleiner ist als eine Breite des Sitzbereichs in einem vorderen Bereich. Unter einem "vorderen Bereich des Sitzbereichs" soll dabei insbesondere ein der Rückenlehneneinheit abgewandter Bereich der Sitzbodeneinheit verstanden werden, wobei der vorderere Bereich in etwa zwei Drittel der Sitzbodeneinheit einnimmt. Dadurch kann die Sitzbodeneinheit besonders vorteilhaft ausgebildet werden.

Ferner wird vorgeschlagen, dass das als Bespannungselement ausgebildete Abstützelement von einem flexiblen Material ausgebildet ist. Unter einem "flexiblen Material" soll dabei insbesondere ein Material verstanden werden, das sich in einem Belastungsfall zumindest teilweise elastisch verformt und nach Wegfall der Belastung in seinen Ursprungszustand zurückgeht. Dadurch kann das Abstützelement besonders vorteilhaft ausgebildet werden.

Es wird weiterhin vorgeschlagen, dass eine Länge und/oder eine Breite des Abstützelements einstellbar ist. Darunter, dass eine "Länge und/oder eine Breite des Abstützelements einstellbar ist", soll dabei insbesondere verstanden werden, dass ein Teil des Abstützelements, der zwischen der Sitzbodeneinheit und der Armlehneneinheit angeordnet ist, in zumindest einer Richtung verlängerbar ist, wodurch eine Spannung des Abstützelements eingestellt werden kann. Dabei ist das Abstützelement durch eine Arretiervorrichtung in verschiedene Stellungen arretierbar, wodurch ein Passagier die gewünschte Länge des Abstützelements und damit einen für den Passagier im Bereich des Abstützelements zur Verfügung stehenden Raum einstellen kann. Dadurch können eine Härte und eine Lage des Abstützelements vorteilhaft von einem Passagier nach seinen eigenen Vorlieben eingestellt werden, wodurch ein Komfort für den Passagier vorteilhaft erhöht werden kann.

Zudem wird vorgeschlagen, dass das als Bespannungselement ausgebildete Abstützelement als ein Textil ausgebildet ist. Unter einem "Textil" soll dabei insbesondere ein Stoff oder insbesondere ein Netz verstanden werden. Dadurch kann das Abstützelement besonders vorteilhaft ausgebildet werden.

Die erfindungsgemäße Sitzvorrichtung soll hierbei nicht auf die oben beschriebene Anwendung und Ausführungsform beschränkt sein. Insbesondere kann die erfindungsgemäße Sitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung der erfindungsgemäßen Sitzvorrichtung,
- Fig. 2: eine weitere Ansicht der erfindungsgemäßen Sitzvorrichtung mit einem Abstützelement und
- Fig. 3: eine dritte Ansicht der erfindungsgemäßen Sitzvorrichtung.

### Beschreibung des Ausführungsbeispiels

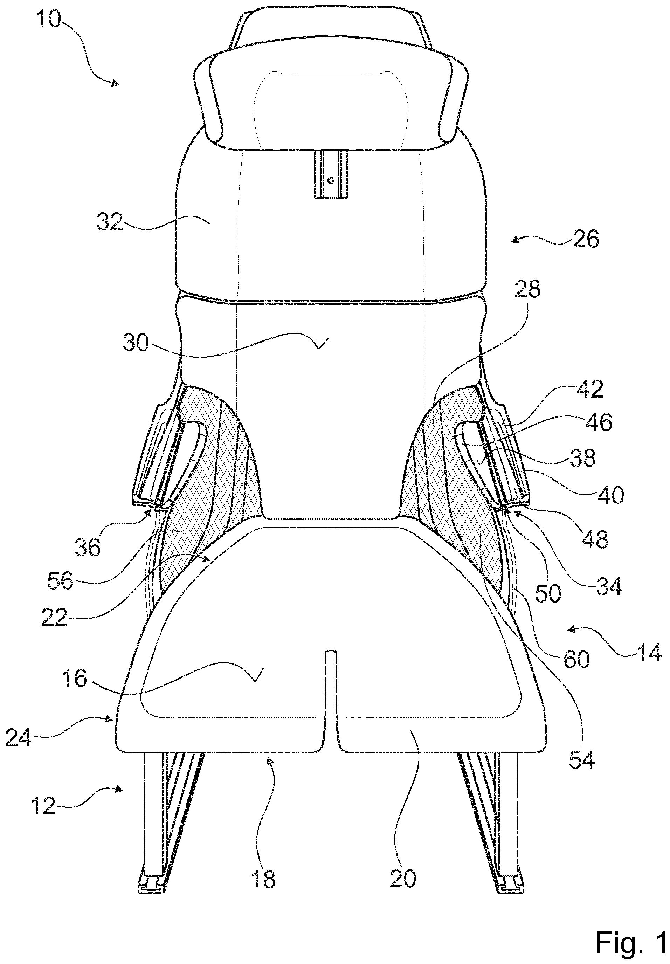

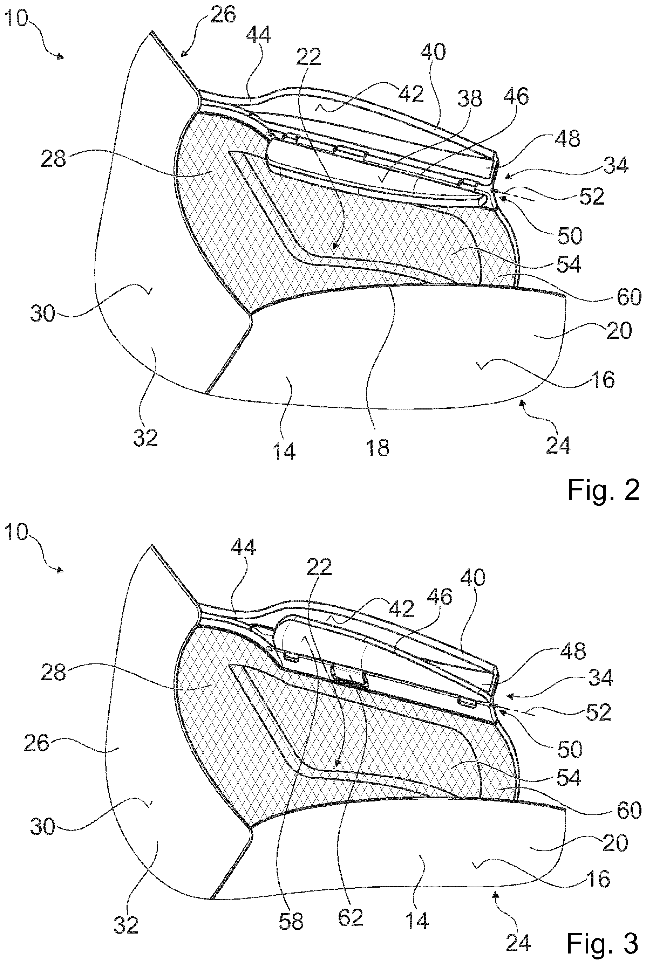

Die Figuren 1 bis 3 zeigen eine erfindungsgemäße Sitzvorrichtung. Die Sitzvorrichtung ist als eine Fluggastsitzvorrichtung ausgebildet. Die Sitzvorrichtung ist als Teil eines Sitzes, insbesondere als Teil eines Fluggastsitzes 10, ausgebildet. Der Fluggastsitz 10 ist in einem montierten Zustand in einer Passagierkabine eines Flugzeugs angebracht. Die Passagierkabine weist einen Kabinenboden auf, auf dem der Fluggastsitz 10 aufgeständert ist. Der Kabinenboden bildet eine Aufständerebene für den Fluggastsitz 10 aus. In der Passagierkabine sind mehrere nicht näher dargestellte Fluggastsitze 10 mit der erfindungsgemäßen Sitzvorrichtung angeordnet. Die weiteren Fluggastsitze 10 sind dabei in einem nicht näher dargestellten und beschriebenen Layout in der Passagierkabine angeordnet. Im Folgenden wird lediglich ein Fluggastsitz 10 mit der erfindungsgemäßen, als Fluggastsitzvorrichtung ausgebildeten Sitzvorrichtung beschrieben. Die Sitzvorrichtung weist eine Aufständereinheit 12 auf. Die Aufständereinheit 12 ist dazu vorgesehen, den Fluggastsitz 10 auf dem Kabinenboden aufzuständern. Die Aufständereinheit 12 ist dabei nicht näher dargestellt. Die Aufständereinheit 12 umfasst mehrere, nicht näher dargestellte Verbindungselemente, die die Aufständereinheit 12 fest mit dem Kabinenboden koppeln. Dabei sind die Verbindungselemente vorzugsweise dazu vorgesehen, formschlüssig in einer Befestigungsschiene des Kabinenbodens angeordnet zu sein und zur festen Anbindung des Fluggastsitzes 10 in der Befestigungsschiene fixiert zu werden.

Die Sitzvorrichtung umfasst eine Sitzbodeneinheit 14. Die Sitzbodeneinheit 14 ist dazu vorgesehen, einen Sitzbereich 16 bereitzustellen, auf dem ein Passagier, insbesondere während eines Flugs, sitzen kann. Der Sitzbereich 16 bildet eine Sitzfläche aus, auf der der Passagier sitzt. Die Sitzbodeneinheit 14 ist mit der Aufständereinheit 12 verbunden. Die Sitzbodeneinheit 14 ist starr mit der Aufständereinheit 12 verbunden. Grundsätzlich ist es auch denkbar, dass die Sitzbodeneinheit 14 über eine Kinematik verschwenkbar mit der Aufständereinheit 12 verbunden ist. Die Sitzbodeneinheit 14 umfasst einen Grundkörper 18. Der Grundkörper 18 der Sitzbodeneinheit 14 ist mit der Aufständereinheit 12 verbunden. Der Grundkörper 18 ist aus einem Faserverbundwerkstoff gebildet. Grundsätzlich ist es auch denkbar, dass der Grundkörper 18 aus einem anderen Material, wie beispielsweise aus einem Metall, gebildet ist. Die Sitzbodeneinheit 14 umfasst eine Polstereinheit 20. Die Polstereinheit 20 ist fest mit dem Grundkörper 18 der Sitzbodeneinheit 14 verbunden. Die Polstereinheit 20 ist aus einem Schaumstoff gebildet. Grundsätzlich ist es auch denkbar, dass die Polstereinheit 20 aus einem anderen, dem Fachmann als sinnvoll erscheinenden, zumindest teilweise elastischen Material gebildet ist. Die Polstereinheit 20 bildet den Sitzbereich 16 der Sitzbodeneinheit 14 aus. Der Sitzbereich 16 weist einen hinteren Bereich 22 und einen vorderen Bereich 24 auf. Der vordere Bereich 24 des Sitzbereichs 16 ist an einem, in Sitzrichtung des Fluggastsitzes 10 gesehen, vorderen Ende der Sitzbodeneinheit 14 angeordnet. Der hintere Bereich 22 der Sitzbodeneinheit 14 ist, in Sitzrichtung gesehen, an einem hintern Ende der Sitzbodeneinheit 14 angeordnet. Der Sitzbereich 16 bildet in dem hinteren Bereich 22 eine Verjüngung aus. Die Polstereinheit 20 ist in dem hinteren Bereich 22 schmäler ausgebildet als in dem vorderen Bereich 24. Eine Sitzfläche, die der Sitzbereich 16 ausbildet, ist in dem hinteren Bereich 22 schmäler als in einem vorderen Bereich 24. Eine Breite des Sitzbereichs 16 in dem vorderen Bereich 24 beträgt 450 mm. Grundsätzlich ist es denkbar, dass die Breite des Sitzbereichs 16 in dem vorderen Bereich 24 zwischen 400 mm und 600 mm liegt. Eine minimale Breite des Sitzbereichs 16 in dem hinteren Bereich 22 beträgt 250 mm. Grundsätzlich ist es denkbar, dass die Breite des Sitzbereichs 16 in dem hinteren Bereich 22 zwischen 200 mm und 450 mm liegt. Die minimale Breite des Sitzbereichs 16 in dem vorderen Bereich 24 ist um wenigstens 30% größer als die minimale Breite des Sitzbereichs 16 in dem hinteren Bereich 22. Dabei nimmt die Breite des hinteren Bereichs 22 des Sitzbereichs 16 entgegen der Sitzrichtung stetig ab. Eine Abnahme der Breite des hinteren Bereichs 22 ist dabei nicht gleichmäßig. Grundsätzlich ist es allerdings auch denkbar, dass die Abnahme der Breite des hinteren Bereichs 22 stetig verläuft. Der hintere Bereich 22 des Sitzbereichs 16 bildet in etwa das hintere Drittel des Sitzbereichs 16 aus.

Die Sitzvorrichtung umfasst eine Rückenlehneneinheit 26. Die Rückenlehneneinheit 26 ist dazu vorgesehen, dass sich ein auf dem Fluggastsitz 10 sitzender Passagier mit seinem Rücken anlehnen kann. Die Rückenlehneneinheit 26 ist an dem hinteren Ende der Sitzbodeneinheit 14 angebracht. Die Rückenlehneneinheit 26 begrenzt den Sitzbereich 16 nach hinten. Die Rückenlehneneinheit 26 ist starr mit der Sitzbodeneinheit 14 verbunden. Grundsätzlich ist es auch denkbar, dass die Rückenlehneneinheit 26 und die Sitzbodeneinheit 14 über eine Kinematik verschwenkbar miteinander verbunden sind. Die Rückenlehneneinheit 26 ist ebenfalls mit der Aufständereinheit 12 gekoppelt. Dabei ist die Rückenlehneneinheit 26 über die Sitzbodeneinheit 14 mit der Aufständereinheit 12 verbunden. Die Rückenlehneneinheit 26 umfasst einen Grundkörper 28. Der Grundkörper 28 der Rückenlehneneinheit 26 bildet eine tragende Struktur der Rückenlehneneinheit 26 aus. Der Grundkörper 28 der Rückenlehneneinheit 26 ist dabei aus einem Faserverbundwerkstoff gebildet. Grundsätzlich ist es auch denkbar, dass der Grundkörper 28 aus einem anderen, dem Fachmann als sinnvoll erscheinenden Material, wie beispielsweise einem Metall, gebildet ist. Der Grundkörper 28 der Rückenlehneneinheit 26 ist dabei mit dem Grundkörper 18 der Sitzbodeneinheit 14 verbunden. Dabei ist es auch denkbar, dass der Grundkörper 28 der Rückenlehneneinheit 26 und der Grundkörper 18 der Sitzbodeneinheit 14 einstückig miteinander ausgebildet sind. Die Rückenlehneneinheit 26 bildet eine Rückenlehnenauflagefläche 30 aus. Zur Ausbildung der Rückenlehnenauflagefläche 30 umfasst die Rückenlehneneinheit 26 ein Polsterelement 32. Das Polsterelement 32 ist auf einer Vorderseite des Grundkörpers 28 der Rückenlehneneinheit 26 angebracht. Zur Anbindung des Polsterelements 32 an den Grundkörper 28 weist die Rückenlehneneinheit 26 mehrere, nicht näher dargestellte Anbindungselemente auf, die korrespondierend in den Grundkörper 28 und die Polsterelement 32 integriert sind. Die Anbindungselemente sind dabei als Flausch- und Hakenbänder ausgebildet. Grundsätzlich ist es auch denkbar, dass die nicht näher dargestellten Anbindungselemente auf eine andere, dem Fachmann als sinnvoll erscheinende Weise als Form- und/oder Kraftschlusselemente ausgebildet sind, wie beispielsweise Druckknöpfe. Das Polsterelement 32 ist aus einem elastischen Material, wie insbesondere aus einem aufgeschäumten Kunststoff, gebildet. Grundsätzlich ist es auch denkbar, dass das Polsterelement 32 aus einem anderen, dem Fachmann als sinnvoll erscheinenden elastischen Kunst- und/oder Naturstoff gebildet ist. Das Polsterelement 32 bildet an seiner, dem Grundkörper 28 abgewandten Vorderseite die Rückenlehnenauflagefläche 30 aus. Dabei weist das Polsterelement 32 einen nicht näher bezeichneten Bezug auf, der das Polsterelement 32 an der Rückenlehnenauflagefläche 30 abschließt. Die Rückenlehnenauflagefläche 30 weist einen unteren Bereich auf. Der untere Bereich der Rückenlehnenauflagefläche 30 ist an einer der Sitzbodeneinheit 14 zugewandten Seite der Rückenlehneneinheit 26 angeordnet. Der untere Bereich der Rückenlehnenauflagefläche 30 ist in einem montierten Zustand dem Kabinenboden zugewandt. Die Rückenlehnenauflagefläche 30 weist einen oberen Bereich auf. Der obere Bereich der Rückenlehnenauflagefläche 30 ist an einer der Sitzbodeneinheit 14 abgewandten Seite der Rückenlehneneinheit 26 angeordnet. Der obere Bereich der Rückenlehnenauflagefläche 30 ist in einem montierten Zustand dem Kabinenboden abgewandt. Die Rückenlehnenauflagefläche 30 weist an dem unteren Ende eine Verjüngung auf. Die Rückenlehnenauflagefläche 30 ist in dem unteren Bereich schmäler als in dem oberen Bereich. Der untere Bereich der Rückenlehnenauflagefläche 30 weist eine Breite auf, die um mehr als 50% kleiner ist als eine Breite der Rückenlehnenauflagefläche 30 in dem oberen Bereich. Ein Übergang zwischen dem oberen, breiten Bereich der Rückenlehnenauflagefläche 30 und dem unteren, schmalen Bereich der Rückenlehnenauflagefläche 30 wird von einem Radius gebildet. Der Verjüngung der Rückenlehnenauflagefläche 30 nimmt in dem unteren Bereich von einem Übergang von dem oberen Bereich bis zu einem unteren Ende der Rückenlehnenauflagefläche 30 zu. Der untere Bereich, der die Verjüngung der Rückenlehnenauflagefläche 30 ausbildet, ist an einem oberen, dem oberen Bereich zugewandten Ende breiter als an dem unteren, dem oberen Bereich abgewandten Ende. Grundsätzlich ist es auch denkbar, dass die Verjüngung über ihre gesamte Länge eine gleiche Breite aufweist.

Die Sitzvorrichtung umfasst weiter eine erste Armlehneneinheit 34. Weiter umfasst die Sitzvorrichtung eine zweite Armlehneneinheit 36. Die beiden Armlehneneinheiten 34, 36 sind dazu vorgesehen, den Sitzbereich 16 seitlich zu begrenzen. Die Armlehneneinheiten 34, 36 begrenzen den Sitzbereich 16 an jeweils zwei gegenüberliegenden Seiten der Sitzbodeneinheit 14. Die Armlehneneinheiten 34, 36 begrenzen den Sitzbereich 16 in einer Richtung orthogonal zu einer Sitzrichtung des Fluggastsitzes 10. Die Armlehneneinheiten 34, 36 sind äquivalent zueinander ausgebildet. Die erste Armlehneneinheit 34 und die zweite Armlehneneinheit 36 sind spiegelbildlich ausgebildet. Im Folgenden wird deshalb lediglich die erste Armlehneneinheit 34 näher beschrieben, wobei die Beschreibung auf die zweite Armlehneneinheit 36 übertragen werden kann, welche spiegelbildlich identisch ausgebildet ist.

Die Armlehneneinheit 34 ist dazu vorgesehen, eine Auflagefläche 38 für einen auf dem Fluggastsitz 10 sitzenden Passagier bereitzustellen. Die Auflagefläche 38 ist dazu vorgesehen, dass ein Passagier wenigstens teilweise seinen Arm und/oder seine Hand darauf ablegen kann. Die Armlehneneinheit 34 umfasst ein Abstütz- und/oder Abtrennelement 40. Das Abstütz- und/oder Abtrennelement 40 ist dazu vorgesehen, eine Abstützfläche 42 für den Passagier bereitzustellen. Dabei bildet das Abstütz- und/oder Abtrennelement 40 eine seitliche Abstützfläche 42 aus. Die Abstützfläche 42 ist in Richtung des Sitzbereichs 16 ausgerichtet. Die Abstützfläche 42 ist im Wesentlichen orthogonal zu der von dem Sitzbereich 16 gebildeten Sitzfläche ausgerichtet. Die Abstützfläche 42 verläuft im Wesentlichen orthogonal zu dem Kabinenboden. Das Abstütz- und/oder Abtrennelement 40 erstreckt sich, beabstandet von der Sitzbodeneinheit 14, von der Rückenlehneneinheit 26 aus nach vorne. An einem hinteren, der Rückenlehneneinheit 26 zugewandten Ende ist das Abstütz- und/oder Abtrennelement 40 mit der Rückenlehneneinheit 26 verbunden. Dabei ist das Abstütz- und/oder Abtrennelement 40 starr mit der Rückenlehneneinheit 26 verbunden. Zur Verbindung des Abstütz- und/oder Abtrennelements 40 mit der Rückenlehneneinheit 26 weisen das Abstütz- und/oder Abtrennelement 40 und die Rückenlehneneinheit 26 jeweils nicht näher dargestellte, korrespondierend ausgebildete Anbindungsbereiche auf, über die das Abstütz- und/oder Abtrennelement 40 starr mit der Rückenlehneneinheit 26 verbunden ist. Das Abstütz- und/oder Abtrennelement 40 ist über eine nicht näher dargestellte Schraubenverbindung mit der Rückenlehneneinheit 26 verbunden. Grundsätzlich ist es auch denkbar, dass das Abstütz- und/oder Abtrennelement 40 über eine andere, dem Fachmann als sinnvoll erscheinende form-, kraft- und/oder stoffschlüssige Verbindung mit der Rückenlehneneinheit 26 fest verbunden ist. Grundsätzlich ist es auch denkbar, dass das Abstütz- und/oder Abtrennelement 40 über eine Kinematik schwenkbar mit der Rückenlehneneinheit 26 gekoppelt ist. Das Abstütz- und/oder Abtrennelement 40 weist eine Oberkante 44 auf, die eine der Sitzbodeneinheit 14 abgewandte Kontur des Abstütz- und/oder Abtrennelements 40 ausbildet. Die Oberkante 44 weist in unterschiedlichen Bereichen des Abstütz- und/oder Abtrennelements 40 unterschiedliche Höhen auf. Dadurch ist das Abstütz- und/oder Abtrennelement 40 in den unterschiedlichen Bereichen unterschiedlich hoch ausgebildet. Das Abstütz- und/oder Abtrennelement 40 weist einen hinteren Bereich auf, der der Rückenlehneneinheit 26 zugewandt ist. Das Abstütz- und/oder Abtrennelement 40 weist einen mittleren Bereich auf, der an einer der Rückenlehneneinheit 26 abgewandten Seite des hinteren Bereichs des Abstütz- und/oder Abtrennelements 40 anschließt. In dem hinteren Bereich weist das Abstütz- und/oder Abtrennelement 40 eine Höhe auf, die kleiner ist als eine Höhe in dem mittleren Bereich des Abstütz- und/oder Abtrennelements 40. Das Abstütz- und/oder Abtrennelement 40 ist in dem der Rückenlehne zugewandten Bereich flacher ausgebildet, um einen Freiraum für einen Ellenbogen des auf dem Sitz sitzenden Passagiers zu schaffen. Dabei bildet die Oberkante 44 in dem hinteren Bereich eine Auflagefläche, insbesondere für den Ellenbogen eines Passagiers, aus. Das Abstütz- und/oder Abtrennelement 40 weist einen vorderen Bereich auf, der auf einer dem hinteren Bereich abgewandten Seite des mittleren Bereichs angeordnet ist. In dem vorderen Bereich weist das Abstütz- und/oder Abtrennelement 40 wieder eine geringere Höhe auf als in dem mittleren Bereich. Die Kontur ist von dem hinteren Bereich über den mittleren Bereich zu dem vorderen Bereich geschwungen ausgebildet. Die Höhe des Abstütz- und/oder Abtrennelements 40 steigt in einem Übergang von dem hinteren Bereich zu dem vorderen Bereich in einem Bogen an, wobei eine maximale Höhe des Abstütz- und/oder Abtrennelements 40 dabei kurz nach dem Übergang zum mittleren Bereich erreicht ist. Von der maximalen Höhe nimmt die Höhe des Abstütz- und/oder Abtrennelements 40 bis hin zu dem vorderen Ende des Abstütz- und/oder Abtrennelements 40 in einem Bogen stetig ab. Das Abstütz- und/oder Abtrennelement 40 bildet in etwa die Form einer halben Pfeilspitze aus.

Die Armlehneneinheit 34 weist zur Ausbildung der Auflagefläche 38 ein erstes Auflageelement 46 aus. Das Auflageelement 46 ist dazu vorgesehen, in zumindest einem Betriebszustand die im Wesentlichen parallel zur Sitzfläche ausgerichtete Auflagefläche 38 auszubilden. Das Auflageelement 46 weist eine Flügelform auf. Das Auflageelement 46 weist einen hinteren Bereich auf, der der Rückenlehneneinheit 26 zugewandt ist. Ein hinteres Ende des Auflageelements 46 ist in einem montierten Zustand beabstandet zu der Rückenlehneneinheit 26 angeordnet. Das erste Auflageelement 46 ist zwischen verschiedenen Stellungen verstellbar ausgebildet. Das erste Auflageelement 46 ist schwenkbar ausgebildet. Das erste Auflageelement 46 ist zu dem Abstütz- und/oder Abtrennelement 40 schwenkbar gelagert. Das erste Auflageelement 46 ist dabei zwischen einer Ruhestellung und einer Gebrauchsstellung verschwenkbar. In einer Ruhestellung ist das Auflageelement 46 an das Abstütz- und/oder Abtrennelement 40 angeklappt. In der Ruhestellung des Auflageelements 46 ist die Auflagefläche 38, die das Auflageelement 46 ausbildet, nicht von einem Passagier zur Auflage nutzbar. Ein Teil der Auflagefläche 38, der von dem Auflageelement 46 gebildet wird, ist in der Ruhestellung der Abstützfläche 42 des Abstütz- und/oder Abtrennelements 40 zugewandt. In der Gebrauchsstellung ist das Auflageelement 46 von dem Abstütz- und/oder Abtrennelement 40 weggeklappt. Ein Winkel zwischen der Abstützfläche 42 des Abstütz- und/oder Abtrennelements 40 und der Auflagefläche 38 des ersten Auflageelements 46 beträgt in der Gebrauchsstellung in etwa 90 Grad. In der Gebrauchsstellung bilden das Abstütz- und/oder Abtrennelement 40 und das Auflageelement 46 im Wesentlichen eine L-Form aus.

In der Ruhestellung bildet das Auflageelement 46 eine Abstützfläche 58 aus. Die Abstützfläche 58 des Auflageelements 46 ist von einer der Auflagefläche 38 gegenüberliegenden Unterseite des Auflageelements 46 ausgebildet. In der Gebrauchsstellung ist die Abstützfläche 58 nach unten ausgerichtet und der Sitzbodeneinheit 14 zugewandt. In der Ruhestellung, in der das Auflageelement 46 an das Abstütz- und/oder Abtrennelement 40 angeklappt ist, ist die Abstützfläche 58 nach innen gerichtet und dem Sitzbereich 16 zugewandt. An der Abstützfläche 58 kann sich ein Passagier anlehnen. Insbesondere in einer Schlafposition, in der die Armlehneneinheit 34 nicht zum Ablegen des Arms genutzt wird, kann sich der Passagier vorteilhaft komfortabel in dem Fluggastsitz 10 positionieren und sich seitlich an der Abstützfläche 58 des Auflageelements 46 abstützen.

Die Armlehneneinheit 36 weist ein weiteres Auflageelement 48 auf. Das weitere Auflageelement 48 ist dazu vorgesehen, die Auflagefläche 38 für den Passagier zumindest teilweise auszubilden. Das weitere Auflageelement 48 ist dabei zwischen dem Abstütz- und/oder Abtrennelement 40 und dem ersten Auflageelement 46 angeordnet. Das weitere Auflageelement 48 ist starr mit dem Abstütz- und/oder Abtrennelement 40 verbunden. Dabei ist das weitere Auflageelement 48 einstückig mit dem Abstütz- und/oder Abtrennelement 40 ausgebildet. Grundsätzlich ist es auch denkbar, dass das weitere Auflageelement 48 form-, kraft- und/oder stoffschlüssig mit dem Abstütz- und/oder Abtrennelement 40 verbunden ist. Dabei ist es beispielsweise denkbar, dass das Auflageelement 48 über eine Schraubenverbindung oder eine Klebeverbindung mit dem Abstütz- und/oder Abtrennelement 40 verbunden ist. Ein Übergang zwischen der von dem Abstütz- und/oder Abtrennelement 40 ausgebildeten Abstützfläche 42 und der von dem weiteren Auflageelement 48 ausgebildeten Auflagefläche 38 ist von einem Radius gebildet.

Zur schwenkbaren Lagerung des ersten Auflageelements 46 zu dem Abstütz- und/oder Abtrennelement 40 weist die Armlehneneinheit 34 ein Scharnier 50 auf. Das Scharnier 50 ist zwischen dem ersten Auflageelement 46 und dem weiteren Auflageelement 48 angeordnet. Das Scharnier 50 ist teilweise von dem ersten Auflageelement 46 und teilweise von dem weiteren Auflageelement 48 gebildet. Zur Ausbildung des Scharniers 50 weist das erste Auflageelement 46 mehrere, beabstandet zueinander angeordnete Durchgangslöcher auf, die durch Ausnehmungen voneinander getrennt sind. Zur Ausbildung des Scharniers 50 bildet das weitere Auflageelement 48 ebenfalls Durchgangslöcher auf, die in angeformten Stegen eingebracht sind, welche korrespondierend zu den Ausnehmungen ausgebildet sind, die das erste Auflageelement 48 zwischen seinen Durchgangslöchern aufweist. In einem montierten Zustand sind die an das weitere Auflageelement 48 angeformten Stege in den Ausnehmungen des ersten Auflageelements 46 angeordnet, wodurch die Durchgangslöcher des ersten Auflageelements 46 und des weiteren Auflageelements 48 in einer Flucht liegen. Das Scharnier 50 weist ein Stiftelement auf, welches zur schwenkbaren Verbindung des ersten Auflageelements 46 und des weiteren Auflageelements 48 durch die Durchgangslöcher beider Auflageelemente 46, 48 des Scharniers 50 geführt ist. Über das Stiftelement sind die beiden Auflageelemente 46, 48 zueinander schwenkbar. Das Stiftelement bildet eine Schwenkachse 52 aus, um die das erste Auflageelement 46 zu dem Abstütz- oder Abtrennelement 40 verschwenkbar ist. Die Schwenkachse 52 verläuft parallel zu der Sitzrichtung. Dabei weist das Scharnier 50 ein Stoppelement 62 auf, das das erste Auflageelement 46 in der Gebrauchsstellung sowie in der Ruhestellung hält. Das Stoppelement 62 ist als ein Anschlagselement ausgebildet, das starr mit dem Auflageelement 46 verbunden ist. Das Stoppelement 62 schlägt in der Gebrauchsstellung an einen nicht näher dargestellten Anschlag unterhalb des Auflageelements 48 an, sodass das Auflageelement 46 in der Gebrauchsstellung fixiert ist. Grundsätzlich ist es auch denkbar, dass das Scharnier 50 ein oder mehrere Rastelemente aufweist, die das erste Auflageelement 46 in der Gebrauchsstellung sowie in der Ruhestellung fixieren. Durch die Lagerung über das Scharnier 50 ist das erste Auflageelement 46 an einem unteren Ende der Armlehneneinheit 34 angelenkt.

Die Sitzvorrichtung umfasst ein erstes Abstützelement 54. Das Abstützelement 54 überspannt einen Bereich zwischen der Sitzbodeneinheit 14 und der Armlehneneinheit 34. Die Sitzvorrichtung umfasst ein zweites Abstützelement 56, das einen Bereich zwischen der Sitzbodeneinheit 14 und der Armlehneneinheit 36 ausbildet. Das Abstützelement 56 ist dabei spiegelbildlich zu dem Abstützelement 54 ausgebildet. Da die Abstützelemente 54, 56 im Wesentlichen identische Spiegelbilder voneinander darstellen, wird im Folgenden lediglich das erste Abstützelement 54 näher beschrieben. Die folgende Beschreibung des ersten Abstützelements 54 kann ebenfalls zur Erläuterung des zweiten Abstützelements 56 herangezogen werden.

Das Abstützelement 54, das den Bereich zwischen der Sitzbodeneinheit 14 und der Armlehneneinheit 34 überspannt, ist dazu vorgesehen, dass sich der auf dem Fluggastsitz 10 sitzende Passagier mit seinem unteren Rückenbereich daran abstützen kann. Das Abstützelement 54 ist für eine seitliche Abstützung des Passagiers vorgesehen. Das Abstützelement 54 ist in dem Bereich zwischen der Sitzbodeneinheit 14, der Armlehneneinheit 34 und der Rückenlehneneinheit 26 angeordnet. Das Abstützelement 54 ist als ein Bespannungselement ausgebildet. Das als Bespannungselement ausgebildete Abstützelement 54 ist zwischen der Armlehneneinheit 34, der Sitzbodeneinheit 14 und der Rückenlehneneinheit 26 gespannt. Dabei ist das als Bespannungselement ausgebildete Abstützelement 54 von einem Netz gebildet. Grundsätzlich ist es auch denkbar, dass das als Bespannungselement ausgebildete Abstützelement 54 von Stoff oder einem anderen elastischen Material ausgebildet ist, wie beispielsweise Leder oder aus einem dünnen Kunststoffelement. Das Abstützelement 54 ist mit einem oberen Ende an der Armlehneneinheit 34 angebunden. Das Abstützelement 54 erstreckt sich über eine gesamte Länge der Armlehneneinheit 34. Das Abstützelement 54 ist an einer unteren Seite des Auflageelements 48 angebracht. Grundsätzlich ist es auch denkbar, dass das Abstützelement 54 an einem anderen Bauteil der Armlehneneinheit 34 angebracht ist. Zur Anbindung des Abstützelements 54 an das Auflageelement 48 weist das Abstützelement 54 einen nicht näher gezeigten Anbindungsbereich auf. Der Anbindungsbereich ist an dem oberen Ende des Abstützelements 54 angeordnet. Der Anbindungsbereich weist dabei wenigstens ein Anbindungselement auf, über das das Abstützelement 54 mit der Armlehneneinheit 34 verbindbar ist. Dabei ist das Anbindungselement als ein Form- und/oder Kraftschlusselement ausgebildet, wie beispielsweise als ein Flausch- und Hakenband oder als ein Teil eines Reißverschlusses. Grundsätzlich ist es auch denkbar, dass das Abstützelement 54 in dem Anbindungsbereich über eine Klemmverbindung mit der Armlehneneinheit 34 verbunden ist. Alternativ wäre es auch denkbar, dass das Abstützelement 54 in seinem Anbindungsbereich über eine Stoffschlussverbindung, wie insbesondere einer Klebeverbindung, mit der Armlehneneinheit 34, insbesondere mit dem Auflageelement 48, verbunden ist.

An einem hinteren Ende ist das Abstützelement 54 an die Rückenlehneneinheit 26 angebunden. Zur Anbindung an die Rückenlehneneinheit 26 weist das Abstützelement 54 an seinem hinteren Ende einen nicht näher dargestellten Anbindungsbereich auf. Mit dem nicht näher dargestellten Anbindungsbereich ist das Abstützelement 54 mit dem Grundkörper 28 der Rückenlehneneinheit 26 verbunden. Der Anbindungsbereich weist dabei wenigstens ein Anbindungselement auf, über das das Abstützelement 54 mit dem Grundkörper 28 der Rückenlehneneinheit 26 verbindbar ist. Dabei ist das Anbindungselement als ein Form- und/oder Kraftschlusselement ausgebildet, wie beispielsweise als ein Flausch- und Hakenband oder als ein Teil eines Reißverschlusses. Grundsätzlich ist es auch denkbar, dass das Abstützelement 54 in dem Anbindungsbereich über eine Klemmverbindung mit dem Grundkörper 28 der Rückenlehneneinheit 26 verbunden ist. Alternativ wäre es auch denkbar, dass das Abstützelement 54 über eine Kederverbindung mit der Rückenlehneneinheit 26 verbunden ist. Alternativ wäre auch denkbar, dass das Abstützelement 54 in seinem Anbindungsbereich über eine Stoffschlussverbindung, wie insbesondere einer Klebeverbindung, mit dem Grundkörper 28 der Rückenlehneneinheit 26 verbunden ist. In einem montierten Zustand schließt das Abstützelement 54 direkt an die Verjüngung in der Rückenlehnenauflagefläche 30 an. Das Abstützelement 54 erstreckt sich an einem hinteren Ende von einem oberen Punkt, an dem das Abstützelement 54 mit der Armlehneneinheit 34 verbunden ist, in Richtung der Sitzbodeneinheit 14 nach innen. Das Abstützelement 54 geht an seiner der Rückenlehneneinheit 26 zugewandten Seite in die Rückenlehnenauflagefläche 30 über.

An seinem unteren Ende ist das Abstützelement 54 mit der Sitzbodeneinheit 14 verbunden. Das Abstützelement 54 ist mit dem Grundkörper 18 der Sitzbodeneinheit 14 verbunden. Zur Anbindung des Abstützelements 54 an die Sitzbodeneinheit 14 umfasst das Abstützelement 54 einen Anbindungsbereich. Über den Anbindungsbereich ist das Abstützelement 54 fest mit dem Grundkörper 18 verbunden. Grundsätzlich ist es auch denkbar, dass das Abstützelement 54 über den Anbindungsbereich nicht fest mit dem Grundkörper 18 der Sitzbodeneinheit 14 verbunden ist, sondern lediglich zwischen dem Grundkörper 18 und der Polstereinheit 20 eingeklemmt ist. Alternativ wäre es auch denkbar, dass das Abstützelement 54 über eine Kederverbindung mit dem Grundkörper 18 der Sitzbodeneinheit 14 verbunden ist. In einem montierten Zustand schließt das Abstützelement 54 direkt an die Verjüngung der Sitzbodeneinheit 14 an. Dadurch erstreckt sich das Abstützelement 54 von einem vorderen Ende, welches in etwa an dem vorderen, der Rückenlehneneinheit 26 abgewandten Ende der Armlehneneinheit 34 angeordnet ist, von außen in Richtung der Rückenlehneneinheit 26 nach innen. An einem Punkt, an dem sich die Verjüngung der Rückenlehnenauflagefläche 30 und die Verjüngung der Sitzbodeneinheit 14 treffen, erstreckt sich das Abstützelement 54 am weitesten nach innen. Von dem Punkt, an dem sich die Verjüngung der Rückenlehnenauflagefläche 30 und die Verjüngung der Sitzbodeneinheit 14 treffen, erstreckt sich das Abstützelement 54, in Sitzrichtung gesehen, nach außen. Von dem Punkt, an dem sich die Verjüngung der Rückenlehnenauflagefläche 30 und die Verjüngung der Sitzbodeneinheit 14 treffen, erstreckt sich das Abstützelement 54 in Richtung der Rückenlehneneinheit 26, also nach oben gesehen, ebenfalls nach außen.

Das Abstützelement 54 ist als ein Bespannungselement ausgebildet. Das als Bespannungselement ausgebildete Abstützelement 54 ist in dem Bereich zwischen der Armlehneneinheit 34 der Sitzbodeneinheit 14 und der Rückenlehneneinheit 26 aufgespannt. Das als Bespannungselement ausgebildete Abstützelement 54 ist dabei von einem flexiblen Material ausgebildet. Insbesondere ist das als Bespannungselement ausgebildete Abstützelement 54 von einem Textil gebildet. Das Abstützelement 54 ist von einem Netz gebildet. Grundsätzlich ist es auch denkbar, dass das Abstützelement 54 aus einem Stoff oder einem anderen flexiblen Material gebildet ist. Dabei ist es denkbar, dass das Abstützelement 54 beispielsweise von einer Kunststoffplatte ausgebildet ist. Durch die Ausbildung des Abstützelements 54 als ein Bespannungselement kann sich das Abstützelement 54 vorteilhaft an eine Kontur des auf dem Fluggastsitz 10 sitzenden Passagiers anpassen.

Die Armlehneneinheit 34 weist ein Versteifungselement 60 auf. Das Versteifungselement 60 ist an einem vorderen Ende des Abstützelements 54 angebracht. Das Versteifungselement 60 ist dazu vorgesehen, das Abstützelement 54 in seinem vorderen Bereich in Form zu halten. Das Versteifungselement 60 ist dabei als ein Steg ausgebildet, an dem das Abstützelement 54 angebunden ist. Das Versteifungselement 60 verbindet dabei die Armlehneneinheit 34 mit der Sitzbodeneinheit 14. Das Versteifungselement 60 ist dabei an dem vorderen Ende der Armlehneneinheit 34 angeordnet und erstreckt sich von einer Unterseite der Armlehneneinheit 34 nach unten in Richtung der Sitzbodeneinheit 14. An seinem unteren Ende ist das Versteifungselement 60 fest mit der Sitzbodeneinheit 14, insbesondere mit dem Grundkörper 18 der Sitzbodeneinheit 14, verbunden. Grundsätzlich ist es auch denkbar, dass das Versteifungselement 60 lediglich als eine Verstärkung ausgebildet ist, die in das von einem Textil gebildete Abstützelement 54 eingebracht ist. Dabei wäre es beispielsweise denkbar, dass ein Steg in das Abstützelement 54 eingenäht ist.

Das Abstützelement 54 ist in seiner Länge und/oder in seiner Breite einstellbar. Dadurch kann eine Härte bzw. eine Nachgiebigkeit des Abstützelements 54 eingestellt werden. Dadurch kann ein Passagier je nach seinen Proportionen das Abstützelement 54 so einstellen, dass ein maximaler Komfort für ihn entsteht. Zur Einstellung der Länge und/oder Breite umfasst die Sitzvorrichtung eine nicht näher dargestellte Einstelleinheit. Die Einstelleinheit weist einen Arretiermechanismus auf, der das als Bespannungselement ausgebildete Abstützelement 54 auf verschiedenen Längen arretieren kann. Durch den Arretiermechanismus kann eine Größe des zwischen der Sitzbodeneinheit 14, der Armlehneneinheit 34 und der Rückenlehneneinheit 26 gespannten Abstützelements 54 eingestellt werden. Dazu weist der Arretiermechanismus ein Klemmelement auf, das das Abstützelement 54 auf einer Seite einklemmt. Je nachdem, wie hart oder weich das Abstützelement 54 eingestellt ist, ist ein mehr oder weniger großer Teil des Abstützelements 54 in den Bereich zwischen der Sitzbodeneinheit 14, der Armlehneneinheit 34 und der Rückenlehneneinheit 26 freigegeben. Ist das Abstützelement 54 hart eingestellt, ist ein überschüssiger Teil des Abstützelements 54 hinter dem Arretiermechanismus angeordnet und nicht von dem Passagier nutzbar. Dadurch ist das Abstützelement 54 stärker gespannt und kann nicht so weit von einem Passagier ausgelenkt werden. Wird das Abstützelement 54 weicher eingestellt, wird der vormals hinter dem Klemmelement eingeklemmte überschüssige Teil freigegeben und befindet sich nun auch in dem Bereich zwischen der Sitzbodeneinheit 14, der Armlehneneinheit 34 und der Rückenlehneneinheit 26. Dadurch ist das Abstützelement 54 weniger gespannt und kann so von einem Passagier weiter ausgelenkt werden.

### Bezugszeichen

- 10: Fluggastsitz
- 12: Aufständereinheit
- 14: Sitzbodeneinheit
- 16: Sitzbereich
- 18: Grundkörper
- 20: Polstereinheit
- 22: hinterer Bereich
- 24: vorderer Bereich
- 26: Rückenlehneneinheit
- 28: Grundkörper
- 30: Rückenlehnenauflagefläche
- 32: Polsterelement
- 34: Armlehneneinheit
- 36: Armlehneneinheit
- 38: Auflagefläche
- 40: Abstütz- und/oder Abtrennelement
- 42: Abstützfläche
- 44: Oberkante
- 46: Auflageelement
- 48: Auflageelement
- 50: Scharnier
- 52: Schwenkachse
- 54: Abstützelement
- 56: Abstützelement
- 58: Abstützfläche
- 60: Versteifungselement
- 62: Stoppelement

## Patentansprüche

1. Sitzvorrichtung, insbesondere Fluggastsitzvorrichtung, mit zumindest einer Sitzbodeneinheit (14), die einen Sitzbereich (16) ausbildet, mit wenigstens einer Rückenlehneneinheit (26), die den Sitzbereich (16) wenigstens nach hinten begrenzt, mit zumindest einer Armlehneneinheit (34, 36), die dazu vorgesehen ist, zumindest den Sitzbereich (16) seitlich zu begrenzen, und mit wenigstens einem Abstützelement (54, 56), das zumindest einen Bereich zwischen der Sitzbodeneinheit (14), der Armlehneneinheit (34, 36) und/oder der Rückenlehneneinheit (26) überspannt, **dadurch gekennzeichnet, dass** das Abstützelement (54, 56) als ein Bespannungselement ausgebildet ist, das zwischen der Armlehneneinheit (34, 36), der Sitzbodeneinheit (14) und der Rückenlehneneinheit (26) gespannt ist und an dem sich ein Passagier mit einem Teil seines Körpers abstützen kann, wobei das Abstützelement (54, 56) an seinem unteren Ende mit der Sitzbodeneinheit (14) verbunden ist und an seinem oberen Ende an der Armlehneneinheit (34, 36) angebunden ist.

2. Sitzvorrichtung nach Anspruch 1, **dadurch gekennzeichnet, dass** die Armlehneneinheit (34, 36) wenigstens ein Auflageelement (46, 48) umfasst, an dem das Abstützelement (54, 56) angebunden ist.

3. Sitzvorrichtung nach einem der vorhergehenden Ansprüche, **dadurch gekennzeichnet, dass** die Armlehneneinheit (34, 36) wenigstens ein Versteifungselement (60) aufweist, das dazu vorgesehen ist, das Abstützelement (54, 56) auszusteifen.

4. Sitzvorrichtung nach Anspruch 3, **dadurch gekennzeichnet, dass** das Abstützelement (54, 56) mit seinem vorderen Ende an dem Versteifungselement (60) angebunden ist.

5. Sitzvorrichtung nach einem der vorhergehenden Ansprüche, **dadurch gekennzeichnet, dass** die Rückenlehneneinheit (26) eine Rückenlehnenauflagefläche (30) ausbildet, die in einem unteren Bereich eine Verjüngung aufweist.

6. Sitzvorrichtung nach Anspruch 5, **dadurch gekennzeichnet, dass** das Abstützelement (54, 56) direkt an die Verjüngung der Rückenlehnenauflagefläche (30) anschließt.

7. Sitzvorrichtung nach einem der vorhergehenden Ansprüche, **dadurch gekennzeichnet, dass** der Sitzbereich (16) der Sitzbodeneinheit (14) in einem hinteren Bereich eine Verjüngung aufweist.

8. Sitzvorrichtung nach Anspruch 7, **dadurch gekennzeichnet, dass** das Abstützelement (54, 56) direkt an die Verjüngung des Sitzbereichs (16) anschließt.

9. Sitzvorrichtung nach einem der vorhergehenden Ansprüche, **dadurch gekennzeichnet, dass** das als Bespannungselement ausgebildete Abstützelement (54, 56) von einem flexiblen Material ausgebildet ist.

10. Sitzvorrichtung nach einem der vorhergehenden Ansprüche, **dadurch gekennzeichnet, dass** eine Länge und/oder eine Breite des Abstützelements (54, 56) einstellbar ist.

11. Sitzvorrichtung nach einem der vorhergehenden Ansprüche, **dadurch gekennzeichnet, dass** das als Bespannungselement ausgebildete Abstützelement (54, 56) als ein Textil ausgebildet ist.

12. Fluggastsitz mit einer Sitzvorrichtung nach einem der vorhergehenden Ansprüche.

## Claims

1. Seat device, in particular flight passenger seat device, with at least one seat bottom unit (14) that forms a sitting region (16), with at least one backrest unit (26) delimiting the sitting region (16) at least rearwards, with at least one armrest unit (34, 36) configured to delimit at least the sitting region (16) sidewise, and with at least one support element (54, 56) spanning over at least a region between the seat bottom unit (14), the armrest unit (34, 36) and/or the backrest unit (26),
**characterised in that** the support element (54, 56) is embodied as a covering element which is tensioned between the armrest unit (34, 36), the seat bottom unit (14) and the backrest unit (26) and which a passenger may support himself with part of his body,
wherein the support element (54, 56) is at its lower end connected to the seat bottom unit (14) and is at its upper end connected to the armrest unit (34, 36).

2. Seat device according to claim 1,
**characterised in that** the armrest unit (34, 36) comprises at least one cushioning element (46, 48), which the support element (54, 56) is connected to.

3. Seat device according to one of the preceding claims,
**characterised in that** the armrest unit (34, 36) comprises at least one stiffening element (60), which is configured for stiffening the support element (54, 56).

4. Seat device according to claim 3,
**characterised in that** the support element (54, 56) is connected to the stiffening element (60) with its front end.

5. Seat device according to one of the preceding claims,
**characterised in that** the backrest unit (26) forms a backrest cushioning surface (30), which has a tapering in a lower region.

6. Seat device according to claim 5,
**characterised in that** the support element (54, 56) directly adjoins the tapering of the backrest cushioning surface (30).

7. Seat device according to one of the preceding claims,
**characterised in that** the sitting region (16) of the seat bottom unit (14) has a tapering in a rear region.

8. Seat device according to claim 7,
**characterised in that** the support element (54, 56) directly adjoins the tapering of the sitting region (16).

9. Seat device according to one of the preceding claims,
**characterised in that** the support element (54, 56), which is embodied as a covering, is implemented of a flexible material.

10. Seat device according to one of the preceding claims,
**characterised in that** a length and/or a width of the support element (54, 56) are/is adjustable.

11. Seat device according to one of the preceding claims,
**characterised in that** the support element (54, 56), which is embodied as a covering, is implemented as a textile.

12. Flight passenger seat with a seat device according to one of the preceding claims.

## Revendications

1. Dispositif de siège, en particulier dispositif de siège de passager d'aéronef, avec au moins une unité fond de siège (14) formant une zone d'assise (16), avec au moins une unité dossier (26) qui délimite la zone d'assise (16) au moins vers l'arrière, avec au moins une unité repose-bras (34, 36) configurée à délimiter au moins la zone d'assise (16) latéralement, et avec au moins un élément de support (54, 56) enjambant au moins une zone entre l'unité fond de siège (14), l'unité repose-bras (34, 36) et/ou l'unité dossier (26),
**caractérisé en ce que** l'élément de support (54, 56) est réalisé comme élément de tenture, qui est tendu entre l'unité repose-bras (34, 36), l'unité fond de siège (14) et l'unité dossier (26) et sur lequel un passager se peut supporter avec une partie de son corps,
l'élément de support (54, 56) étant raccordé à l'unité fond de siège (14) à son extrémité inférieure et étant raccordé à l'unité repose-bras (34, 36) à son extrémité supérieure.

2. Dispositif de siège selon la revendication 1,
**caractérisé en ce que** l'unité repose-bras (34, 36) comporte au moins un élément de revêtement (46, 48), auquel l'élément de support (54, 56) est raccordé.

3. Dispositif de siège selon l'une des revendications précédentes,
**caractérisé en ce que** l'unité repose-bras (34, 36) comporte au moins un élément raidisseur (60) configuré à raidir l'élément de support (54, 56).

4. Dispositif de siège selon la revendication 3,
**caractérisé en ce que** l'élément de support (54, 56) est raccordé à l'élément raidisseur (60) avec son extrémité antérieure.

5. Dispositif de siège selon l'une des revendications précédentes,
**caractérisé en ce que** l'unité dossier (26) forme une surface revêtement-dossier (30) ayant un rétrécissement dans une zone inférieure.

6. Dispositif de siège selon la revendication 5,
**caractérisé en ce que** le rétrécissement de la surface revêtement-dossier (30) est directement suivi de l'élément de support (54, 56).

7. Dispositif de siège selon l'une des revendications précédentes,
**caractérisé en ce que** la zone d'assise (16) de l'unité fond de siège (14) comporte un rétrécissement dans une zone arrière.

8. Dispositif de siège selon la revendication 7,
**caractérisé en ce que** le rétrécissement de la zone d'assise (16) est directement suivi de l'élément de support (54, 56)

9. Dispositif de siège selon l'une des revendications précédentes,
**caractérisé en ce que** l'élément de support (54, 56), qui est réalisé comme élément de tenture, est implémenté d'un matériau flexible.

10. Dispositif de siège selon l'une des revendications précédentes,
**caractérisé en ce qu'**une longueur et/ou une largeur de l'élément de support (54, 56) sont/est ajustable/s.

11. Dispositif de siège selon l'une des revendications précédentes,
**caractérisé en ce que** l'élément de support (54, 56), qui est réalisé comme élément de tenture, est implémenté comme textile.

12. Siège de passager d'aéronef avec un dispositif de siège selon l'une quelconque des revendications précédentes.
